# EUROPEAN PATENT APPLICATION

(11) **EP 1 796 032 A1**
(43) Date of publication of application: **13.06.2007**
(21) Application number: 05743315.3
(22) Date of filing: 24.05.2005
(51) Int. Cl.: G06T 1/00

(54) **PUPIL DETECTION DEVICE AND IRIS AUTHENTICATION APPARATUS**

(30) Priority: 02.08.2004 JP 2004225365
(71) Applicant: MATSUSHITA ELECTRIC INDUSTRIAL CO., LTD., Osaka 571-8501 (JP)
(72) Inventor: SUGITA, Morio, Tokyo 206-0003 (JP); WAKAMORI, Masahiro, Kanagawa 226-0013 (JP); FUJIMATSU, Takeshi, Kanagawa 246-0015 (JP)
(74) Representative: Grünecker, Kinkeldey, Stockmair & Schwanhäusser Anwaltssozietät
(86) International application number: PCT/JP2005/009418
(87) International publication number: WO 2006/013668

(57) **Abstract**

A plurality of concentric circles are each set on an eye image respectively as integrating circle Cᵢ, and an image data extraction unit that extracts the eye image data along integrating circle Cᵢ, a contour integrating unit that integrates the image data extracted by the image data extraction unit along each of the circumference of integrating circle Cᵢ, and a pupil position detection unit that detects center coordinates of integrating circle C₁ whose integrated value obtained by the contour integrating unit changes stepwise with respect to the radius of the integrating circle as positional coordinates of the pupil are provided. The density of the plurality of concentric integrating circles Cᵢ is set to be low as the radius increases.

## Description

### Technical Field

The present invention relates to an iris authentication apparatus used for personal authentication or the like and, more specifically, to a pupil detection device for detecting the position of a pupil from an image including eye (hereinafter, referred to as "eye image").

### Background Art

Hitherto, various methods for detecting the position of a pupil from an eye image are proposed. For example, a method of binarizing image data of the eye image (hereinafter, abbreviated as "eye image data") and detecting a circular area in an area of low-luminance level is known. A method of calculating a contour integral of an image luminance I (x, y) with respect to an arc of a circle having a radius r and center coordinates (x0, yO) and calculating a partial derivative of the calculated amount relating to r in association with increase in the radius r is known. The structure in the aforementioned related art is disclosed, for example, in JP-T-8-504979.

In order to detect the pupil with high degree of accuracy using these methods, it is necessary to process a huge amount of image data at high-speed, and hence it is difficult to process the image data of the eye image on real time basis even though a large CPU having a high processing capability or a bulk memory in the status quo. Also, when the processing amount of the CPU is reduced to a degree which enables real time processing of the image data, there may arise a problem such that the detection accuracy is lowered.

### Disclosure of Invention

The present invention provides a pupil detection device which can detect the position of a pupil at high-speed and with high degree of accuracy.

The pupil detection device of the present invention includes: an image data extraction unit, a contour integrating unit, and a pupil position detection unit. The image data extraction unit determines a plurality of concentric circles on an eye image as integrating circles respectively, and extracts the eye image data along the integrating circles. A contour integrating unit integrates the image data extracted by the image data extraction unit along the respective circumferences of the integrating circles. A pupil position detection unit detects the center coordinates of the integrating circle whose integrated value of the contour integrating unit changes stepwise with respect to the radius of the integrating circle as pupil position coordinates. The density of plurality of concentric integrating circles is set to be reduced as the radius increases.

### Brief Description of the Drawings

Fig. 1 is a circuit block diagram of an iris authentication apparatus using a pupil detection device according to an embodiment of the present invention.
Fig. 2A is a drawing showing an example of an image including a pupil.
Fig. 2B is a drawing showing an integrated value with respect to a radius of an integrating circle.
Fig. 2C is a drawing showing a value obtained by differentiating the integrated value by the radius of the integrating circle.
Fig. 2D is a drawing showing the integrating circles moving on an eye image.
Fig. 3A is a drawing showing an example of an eye image when an integrating circle is positioned in an iris area and luminance at the same moment.
Fig. 3B is a drawing showing an example of the eye image when the integrating circle is positioned on an eyeglass frame and luminance of the same moment.
Fig. 4 is a circuit block diagram of the pupil detection device.
Fig. 5 is a circuit block diagram of an image data extraction unit of the pupil detection device.
Fig. 6 is an explanatory drawing showing an operation of the image data extraction unit of the pupil detection device.
Fig. 7 is a drawing explaining an operation of the image data extraction unit of the pupil detection device.
Fig. 8 is a pattern diagram showing arrangement of the image data to be extracted from the image data extraction unit of the pupil detection device.
Fig. 9 is a circuit block diagram of a pupil position detection unit of the pupil detection device.
Fig. 10 is a drawing explaining an operation of a pupil selection unit of the pupil detection device.
Fig. 11 is a flowchart showing an operation of the pupil selection unit of the pupil detection device.
Fig. 12A is a drawing showing integrated values and difference values for radii of the integrating circle.
Fig. 12B is a drawing showing integrated values and difference values for radii of the integrating circle.
Fig. 13 is a flowchart showing an operation corresponding to one frame of the eye image of the pupil detection device.

### Description of Reference Numerals

- 120: image pickup unit
- 130: illumination unit
- 140: authentication processing unit
- 200: pupil detection device
- 220: image data extraction unit
- 222: partial frame memory
- 224₁-224_{L}: line memory
- 225₁-225_{L}: memory control unit
- 226: multiplexer
- 228₁-228ₙ: selector
- 229: selector control unit
- 230: contour integrating unit
- 240: luminance difference calculation unit
- 250: pupil radius detection unit
- 260: pointer unit
- 270: pupil position detection unit
- 280: pupil candidate retention unit
- 290: pupil selection unit

### Best Mode for Carrying Out the Invention

A pupil detection device according to the present invention provides a pupil detection device which can detect the pupil position at high-speed and with high degree of accuracy.

The pupil detection device of the present invention includes an image data extraction unit, a contour integrating unit, and a pupil position detection unit. The image data extraction unit determines a plurality of concentric circles on an eye image as integrating circles respectively, and extracts the eye image data along the integrating circles. The contour integrating unit integrates the image data extracted by the image data extraction unit along the respective circumferences of the integrating circles. The pupil position detection unit detects center coordinates of the integrating circle whose integrated value obtained from the contour integrating unit has changed stepwise with respect to a radius of the integrating circles as pupil position coordinates. The density of the plurality of concentric integrating circles is set to be reduced as the radius increases. In this arrangement, the pupil position can be detected at high-speed and with high degree of accuracy.

The pupil detection device of the present invention may be set in such a manner that increment of the radii of the plurality of concentric integrating circles grows exponentially with respect to the radii of the integrating circles. In this arrangement as well, the pupil position can be detected at high-speed and with high degree of accuracy.

Preferably, the image data extraction unit of the pupil detection device of the present invention extracts a plurality of image data corresponding to the respective integrating circles simultaneously. In this arrangement, calculation for the respective integrating circles can be carried out in parallel, whereby the pupil can be detected at high-speed.

An iris authentication apparatus of the present invention is provided with the pupil detection device of the present invention. In this arrangement, the iris authentication apparatus in which the pupil detection device which can detect the position of the pupil at high-speed and with high degree of accuracy can be provided.

Referring to the drawings, the iris authentication apparatus in which the pupil detection device in the embodiment of the present invention will be described below.

### (Embodiment)

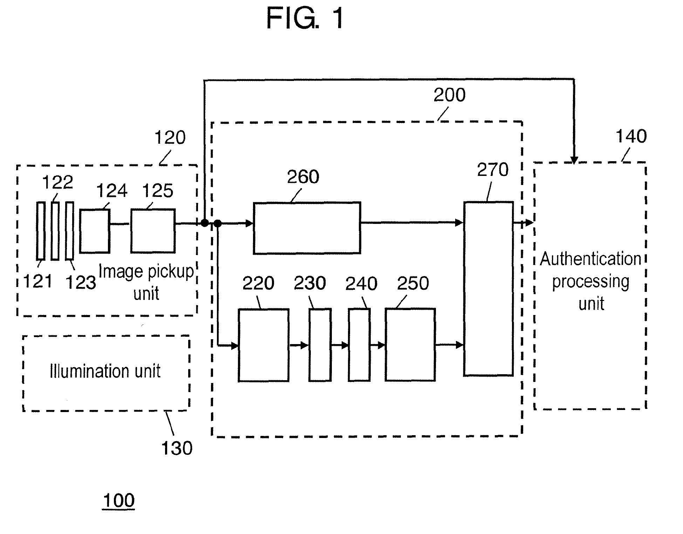

Fig. 1 is a circuit block diagram of the iris authentication apparatus in which the pupil detection device according to the embodiment of the present invention is employed. In addition to pupil detection device 200, Fig. 1 also illustrates image pickup unit 120, illumination unit 130, and authentication processing unit 140 which are necessary to configure iris authentication apparatus 100.

Iris authentication apparatus 100 in this embodiment includes image pickup unit 120, pupil detection device 200, authentication processing unit 140, and illumination unit 130. Image pickup unit 120 picks up an eye image of a user. Pupil detection device 200 detects the position of the pupil and the radius thereof from the eye image. Authentication processing unit 140 performs personal authentication by comparing an iris code obtained from the eye image with a registered iris code. Illumination unit 130 irradiates near-infrared ray of a light amount suitable for obtaining the eye image for illuminating the user's eye and the periphery thereof.

Image pickup unit 120 includes guide mirror 121, visible light eliminating filter 122, lens 123, image pickup element 124 and preprocessing unit 125. In this embodiment, by using a fixed focal length lens as lens 123, compact and light weighted optical system and cost reduction are realized. Guide mirror 121 guides the user to place the eye to a correct image pickup position by reflecting an image of his/her own eye thereon. Then, an image of the user's eye is acquired by image pickup element 124 through lens 123 and visible light eliminating filter 122. Preprocessing unit 125 acquires an image data component from the output signal from image pickup element 124, performs processing such as gain adjustment, which is required as the image data, and outputs as the eye image data of the user.

Pupil detection device 200 includes image data extraction unit 220, contour integrating unit 230, luminance difference calculation unit 240, pupil radius detection unit 250, pointer unit 260, and pupil position detection unit 270. Pupil detection device 200 detects the position of the pupil and the radius thereof from the eye image, and outputs the same to authentication processing unit 140. Pupil detection device 200 will be described later in detail.

Authentication processing unit 140 cuts out an iris image from the eye image data based on the center coordinates and the radius of the pupil detected by pupil detection device 200. Then, authentication processing unit 140 converts the iris image into a specific iris code which indicates a pattern of the iris, and compares the same with the registered iris code to perform authentication operation.

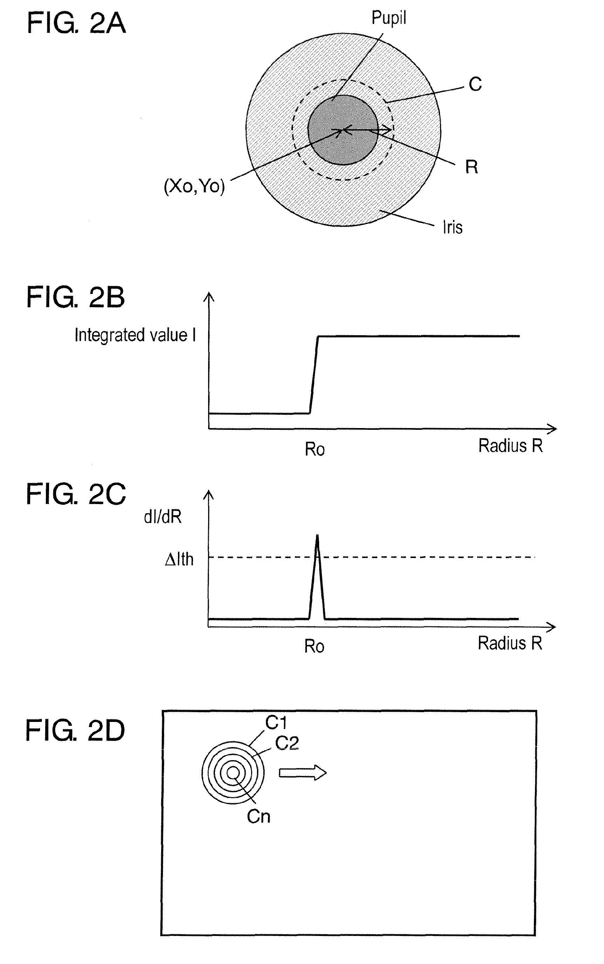

Subsequently, a method of detecting the pupil of pupil detection device 200 will be described. Fig. 2A to Fig. 2D are drawings for explaining a method of detecting the pupil performed by pupil detection device in the embodiment of the present invention. Fig. 2A is a drawing showing an example of an image including a pupil. Fig. 2B is a drawing showing an integrated value with respect to the radius of the integrating circle. Fig. 2C is a drawing showing a value obtained by differentiating the integrated value by the radius of the integrating circle. Fig. 2D is a drawing showing integrating circles which move on the eye image.

The image including the pupil includes a low luminance area of a disk shape showing the pupil, and a middle luminance area of an annular shape indicating the iris outside thereof existing therein as shown in Fig. 2A. Therefore, when the contour integral of the image data is performed along the circumference of integrating circle C having radius R and the positional coordinates (X₀, Y₀) at the center of the pupil, integrated value I changes stepwise on the border of pupil radius R₀, as shown in Fig. 2B. Therefore, by obtaining the radius of the integrating circle when value dI/dR obtaining by differentiating integrated value I by radius R exceeds a threshold (hereinafter, referred to as "difference threshold") ΔIth, pupil radius R₀ can be known as shown in Fig. 2C.

Based on the idea described above, pupil detection device 200 detects the positional coordinates of the pupil (X₀, Y₀) and pupil radius R₀. As shown in Fig. 2D, n integrating circles C₁-Cₙ having the same center coordinates and different radius are set on the eye image, and the image data located on the circumference is integrated with respect to each integrating circle Cᵢ (i=1,2...n). Realistically, an average value of the image data of pixels located on the circumferences of each integrating circle Cᵢ is calculated. Alternatively, a certain number (m) of the pixels are selected from the pixels located on the circumference to add the image data thereof.

In this embodiment, number n of the concentric integrating circles was assumed to be 20, and m=8 pixels were selected from the pixels located on the circumference of each integrating circle Cᵢ to add the image data to obtain integrated value I of the contour integral. As described above, when the center of integrating circles C₁-Cₙ coincides with the center of the pupil, integrated value Iᵢ with respect to each integrating circle Cᵢ changes stepwise. Therefore, when difference value ΔIᵢ with respect to radius R of integrated value Iᵢ is obtained, the values reach extremely large value at a point equal to pupil radius R₀.

On the other hand, since integrated value Iᵢ changes gently when the center of integrating circles C₁-Cₙ do not coincide with the center of the pupil, difference value ΔIᵢ is not a large value. Therefore, by obtaining integrating circle Cᵢ which has large difference value ΔIᵢ larger than difference threshold ΔIth, the position of the pupil and the radius thereof can be obtained.

Then, by moving integrating circles C₁-Cₙ to the respective positions on the eye image, the above-described operation is repeated. In this manner, by obtaining the center coordinates (X, Y) of integrating circle Cᵢ when difference value ΔIᵢ is large and radius R at that time, the positional coordinates (X₀, Y₀) of the pupil and pupil radius R₀ can be obtained.

However, depending on the image, there is a possibility that difference value △Iᵢ shows a large value accidentally. When the number n of integrating circles or the sum m of the number of pixels to be selected on the respective integrating circles is reduced, the amount of calculation can be reduced, and hence pupil detection of high-speed is achieved. In contrast, the possibility that difference value ΔIᵢ shows a large value is accidentally increased, and hence the pupil detection accuracy is reduced. Therefore, luminance difference calculation unit 240 is provided on pupil detection device 200 for calculating difference Bᵢ between the maximum value and the minimum value of the luminance on the circumferences of each integrating circle Cᵢ, and, only when difference Bᵢ is smaller than predetermined threshold (hereinafter referred to as "luminance difference threshold) Bth, integrated value Iᵢ or difference value ΔIᵢ is considered to be effective, so that lowering of the pupil detection accuracy is prevented.

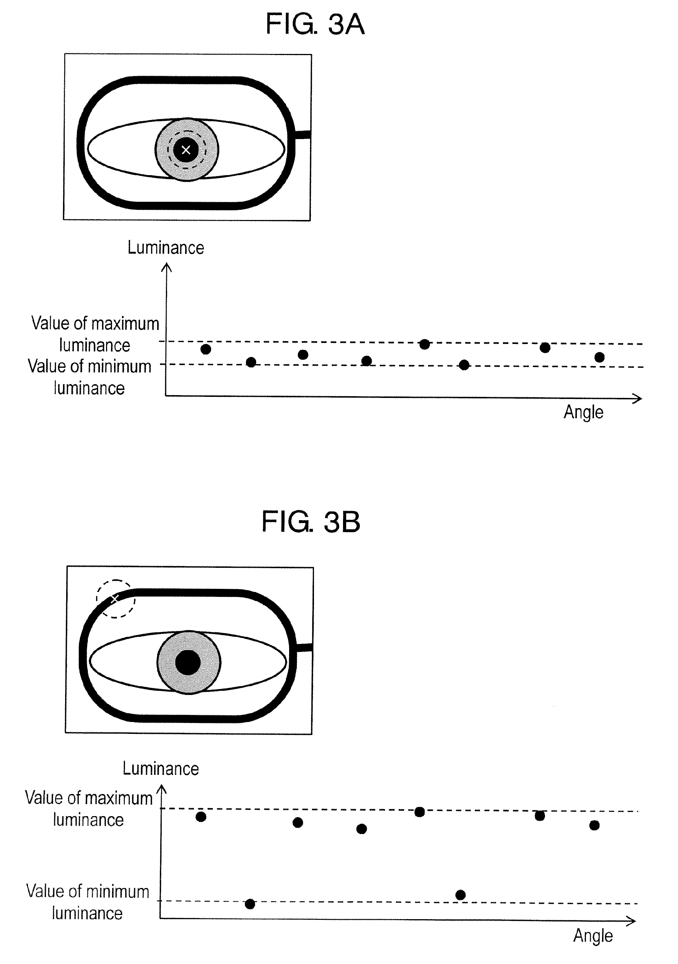

Fig. 3A and Fig. 3B are drawings for explaining the operation of luminance difference calculation unit 240. Fig. 3A is a drawing showing an example of an eye image when the integrating circle is positioned in the iris area and the luminance at the same moment, and Fig. 3B is a drawing showing an example of an eye image when the integrating circle is positioned on an eyeglass frame and luminance of the same moment. When the centers of integrating circles C₁-Cₙ coincide with the center of the pupil, each integrating circle Cᵢ is positioned in an area at relatively uniform luminance such as inside the pupil area or inside the iris area, and hence variations in luminance of the image data on the circumference are small. Fig. 3A shows the integrating circle positioned in the iris area which is an annular middle luminance area. In this case, difference Bᵢ between the maximum value and the minimum value of the luminance on the circumference is small, and does not exceed luminance difference threshold Bth.

However, as shown in Fig. 3B for example, when the centers of integrating circles C₁-Cₙ are positioned on part of a black eyeglass frame, the luminance on the circumference is low on the eyeglass frame and high on the skin. Therefore, difference Bᵢ between the maximum value and the minimum value of luminance is large. In this manner, when difference Bᵢ between the maximum value and the minimum value of luminance on the circumference of each integrating circle Cᵢ is obtained, and only when difference Bᵢ is smaller than luminance difference threshold Bth, integrated value Iᵢ or difference value ΔIᵢ is determined to be effective. Accordingly, erroneous determination such that the eyeglass frame is determined to be the pupil by mistake can be prevented, thereby preventing lowering of the pupil detection accuracy.

Luminance difference threshold Bth is preferably set to be slightly larger than estimated variations in luminance data on the circumference. In other words, a value larger than the difference between the average luminance of the iris and the average luminance of the pupil, and smaller than the difference of the average luminance of the skin and the average luminance of the pupil is recommended. For example, in the case of the luminance having 256 levels, an average luminance of the pupil is on the order of level equal to 40, an average luminance of the iris is on the order of level equal to 100, and an average luminance of the skin is on the order of level equal to 200. Therefore, luminance difference threshold Bth may be set between 60 and 160.

Integrated value I when the integrating circle is located on the pupil is about 40 x 8 = 320, and integrated value I when the integrating circle is located on the iris is about 100 × 8 = 800. Therefore, difference threshold ΔIth may be set to a value on the order of a half of difference 480, that is, on the order of 240.

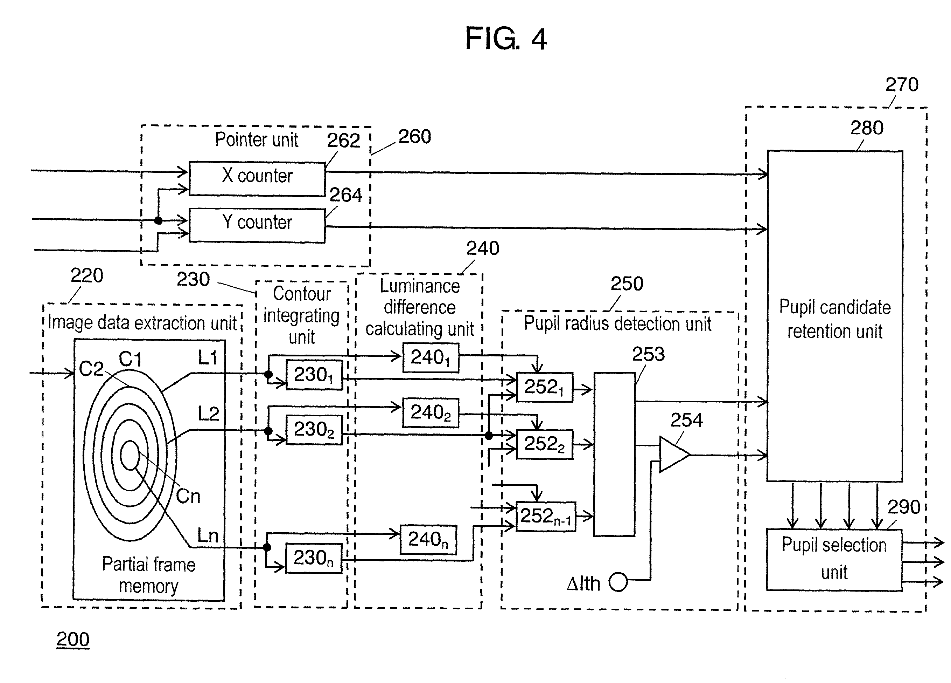

Fig. 4 is a circuit block diagram of the pupil detection device in the embodiment of the present invention. Pupil detection device 200 includes image data extraction unit 220, contour integrating unit 230, luminance difference calculation unit 240, pupil radius detection unit 250, pointer unit 260, and pupil position detection unit 270. Image data extraction unit 220 sets integrating circles C₁-Cₙ on the eye image to extract the image data on the circumference of each integrating circle Cᵢ. Contour integrating unit 230 performs contour integral on the extracted image data for each integrating circle Cᵢ. Luminance difference calculation unit 240 calculates difference Bᵢ between the maximum value and the minimum value of the image data for each integration circle. Pupil radius detection unit 250 obtains difference value ΔIᵢ with respect to radius Rᵢ of integrated value Iᵢ and outputs difference value ΔIᵢ when maximum value ΔI of the difference value is larger than difference threshold ΔIth and radius R of the integrating circle. Pointer unit 260 shows center coordinates (X, Y) of integrating circles C₁-Cₙ. Pupil position detection unit 270 includes pupil candidate retention unit 280 and pupil selection unit 290.

Pupil candidate retention unit 280 considers that the pupil candidate is detected when pupil radius detection unit 250 outputs difference value ΔIᵢ larger than difference threshold ΔIth, and stores the positional coordinates (X, Y) of the plurality of pupil candidates and radius R. Pupil selection unit 290 selects one pupil from the plurality of pupil candidates. In this manner, pupil position detection unit 270 detects the positional coordinates of the pupil and the radius of the pupil from the eye image.

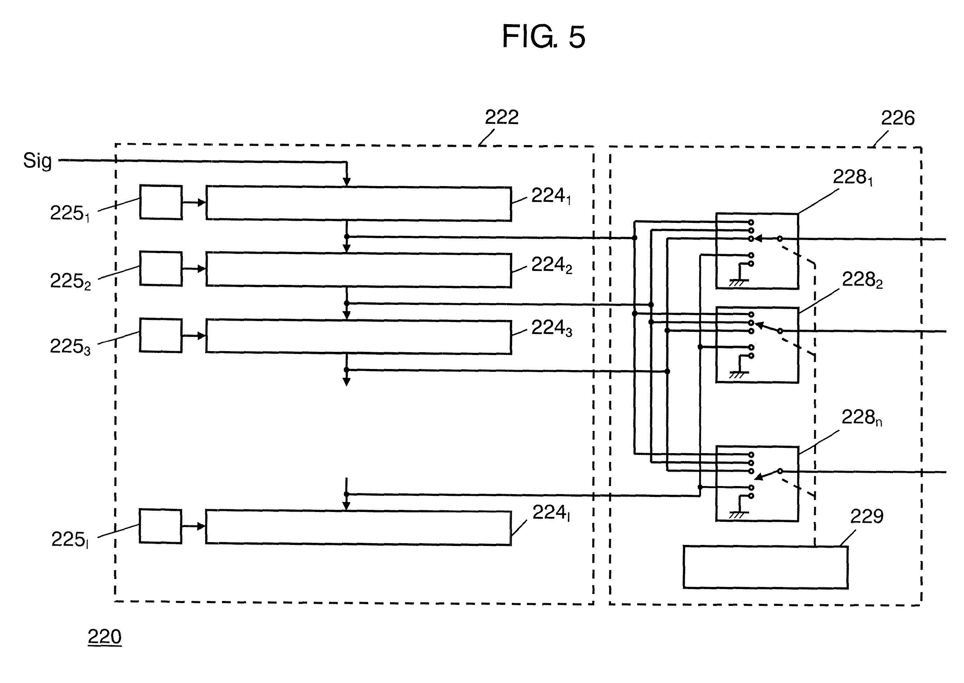

Fig. 5 is a circuit block diagram of image data extraction unit 220. Image data extraction unit 220 includes partial frame memory 222, and multiplexer 226. Multiplexer 226 outputs image data read from partial frame memory 222 together for each integrating circles Cᵢ. Partial frame memory 222 includes a plurality of connected line memories 224₁-224_{L} which are capable of random access. In this embodiment, partial frame memory 222 is composed of L=101 line memories 224₁-224₁₀₁.

Memory control units 225₁-225_{L} control reading and writing of corresponding line memories 224₁-224_{L}. Multiplexer 226 includes n selectors 228₁-228ₙ corresponding to n integrating circles C₁-Cₙ, and selector control unit 229. Selector 228ᵢ selects and outputs image data located on the circumference of the corresponding integrating circle Cᵢ from the image data among the image data outputted from the partial frame memory 222. Image data extraction unit 220 extracts and outputs the read image data together for each integrating circle simultaneously.

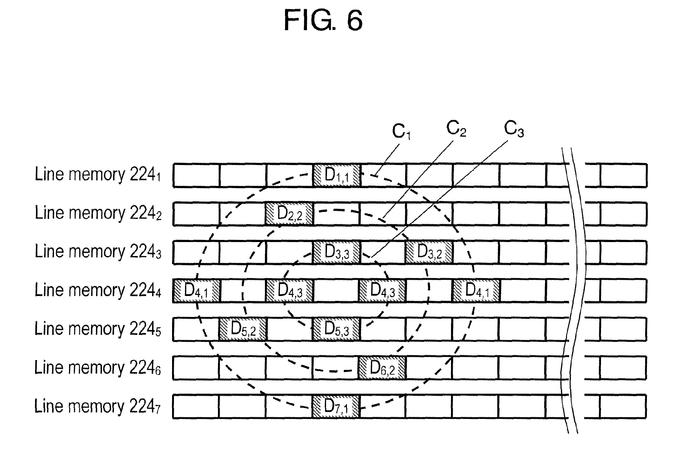

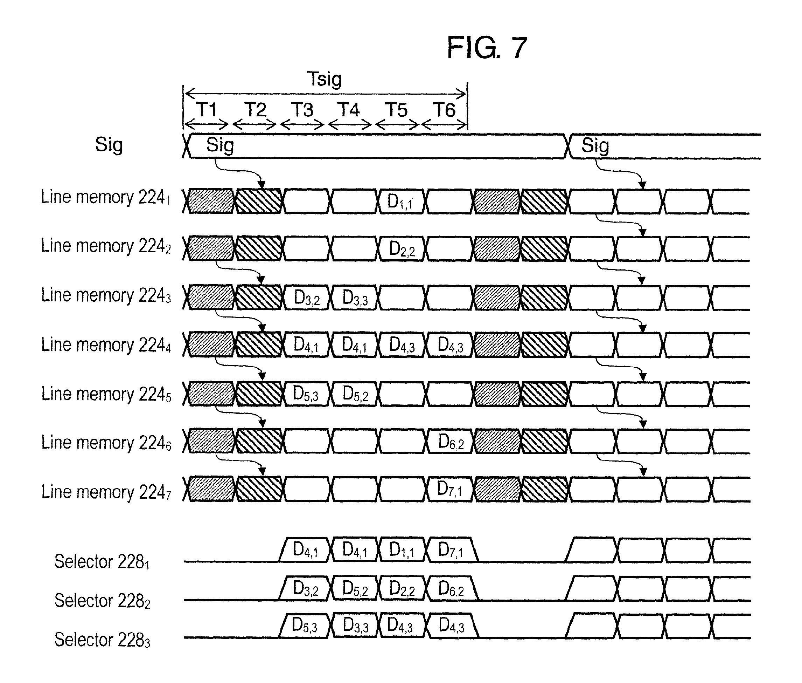

Fig. 6 and Fig. 7 are drawings for explaining an operation of image data extraction unit 220. For simplicity, it is assumed in the description below that seven line memories 224₁-224₇ constitute partial frame memory 222, and three concentric integrating circles C₁-C₃ are set thereon, and that four pixels each are selected from the pixels located on the circumferences of respective integrating circles C₁-C₃ and image data thereof are extracted therefrom. Fig. 6 shows three integrating circles C₁-C₃ set on partial frame memory 222, and twelve image data D_{i,j} which are to be extracted from the respective integrating circles. The character "i" of image data D_{i,j} is a lower case for identifying line memories 224₁-224₇, and the character "j" is a lower case for identifying integrating circles C₁-C₃.

Fig. 7 is a timing chart showing image data Sig sent from preprocessing unit 125 and the image data outputted from line memories 224₁-224₇. Here, it is assumed that time periods T1-T6 during which line memories 224₁-224₇ perform six times of reading and writing operation are provided in a period of Tsig during which one image data is sent from the preprocessing unit 125.

In the first time period T1, the oldest image data written in each line memory 224ᵢ is outputted to next line memory 224ᵢ₊₁. In the next time period T2, the image data outputted from previous line memories 224ᵢ-₁ is written in an empty data area. At this time, first line memory 224₁ writes the image data outputted from preprocessing unit 125 to the empty area. In this manner, first two periods T1, T2 are used for making line memories 224₁-224₇ function as partial frame memory 222.

Subsequent four time periods T3-T6 are used for acquiring image data D_{i,j}. Line memory 224₁ outputs one image data D_{1,1} which corresponds to integrating circle C₁. Line memory 224₂ outputs one image data D_{2,2}. Line memory 224₃ outputs two image data D_{3,2}, D_{3,3}. Line memory 224₄ outputs two each of image data D_{4,1}, D_{4,3}, four in total, respectively.

Line memory 224₅ outputs two image data D_{5,2}, D_{5,3}. Line memory 224₆ outputs one image data D_{6,2}. Line memory 224₇ outputs one image data D₇,₁. When outputting image data, which image data is to be outputted at which timing by each line memory can be set freely to some extent. However, it is forbidden to output the image data corresponding to the identical integrating circle at the same timing.

Subsequently, assuming that the respective line memories output the respective image data in a sequence shown in Fig. 6, the operation of multiplexer 226 will be described. Selector 228₁ corresponding to the integrating circle C₁ selects an output of line memory 224₄ in time period T3 and outputs image data D_{4,1}. In the time period T4 as well, it selects an output of line memory 224₄ and outputs another image data D_{4,1}. In time period T5, it selects an output of line memory 224₁ and outputs the image data D_{1,1}. In time period T6, it selects an output of line memory 224₇ and outputs image data D_{7,1}.

In this manner, only image data D_{4,1}, D_{4,1}, D_{1,1}, D_{7,1} on the circumference of integrating circle C₁ are outputted form selector 228₁. Selector 228₂ selects an output of line memory 224₃ in time period T3. In time period T4, it selects an output of line memory 224₅. In time period T5, it selects an output from line memory 224₂. In time period T6, the output of line memory 224₆ is selected. In this manner, image data D_{3,2}, D_{5,2}, D _{2,2}, D_{6,2} of the circumference of integrating circle C₂ are outputted.

Selector 228₃ also selects an output of line memory 224₅ in time period T3 in the same manner. Time period T4 selects an output of line memory 224₃. In time periods T5 and T6, an output of line memory 224₄ is selected. In this manner, image data D_{5,3}, D_{3,3}, D_{4,3}, D_{4,3} on the circumference of integrating circles C₃ are outputted. Accordingly, multiplexer 226 outputs image data read from partial frame memory 222 for each integrating circle together.

Then, memory control units 225₁-225_{L} control the address of line memories 224₁-224_{L} so that image data D_{i,j} to be outputted is moved by an amount corresponding to one pixel every time when the image data Sig is inputted by one pixel to partial frame memory 222. Consequently, the entire eye image is scanned by integrating circles C₁-Cₙ on the eye image while the image data corresponding to one frame is inputted to partial frame memory 222. At this time, the center coordinates (X, Y) of the integrating circle are shown by the outputs of X counter 262 and Y counter 264.

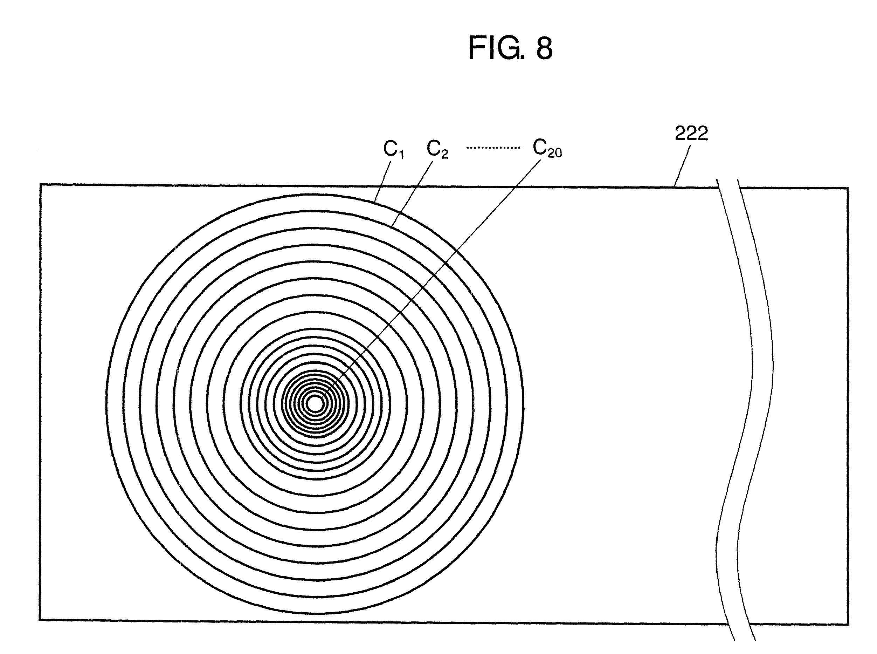

Although the above description has been made assuming that the number of line memory L=7, the number of integrating circle n=3, and the number of image data to be acquired from the circumference of one integrating circle m=4, these numbers are preferably determined considering the detection accuracy, processing time, and the scale of the circuit in parallel. Fig. 8 is a drawing schematically showing the integrating circles on the eye image in this embodiment, and it is assumed that the number of line memory L=101, the number of integrating circle n=20, and the number of image data to be acquired from the circumference of one integrating circle m=8.

In this manner, although the total number of image data to be acquired from image data extraction unit 220 is large, the image data are arranged so as not to concentrate on a specific line memory. This is because the accessible number of times for the line memory during time period Tsig required for sending one image data is limited, and hence it is necessary to keep the number of accesses for all the line memories under the limit. The structure and the operation of image data extraction unit 220 are as described thus far.

Contour integrating unit 230 is provided with independent adders 230₁-230ₙ for respective integrating circles C₁-Cₙ, then m image data positioned on the circumference of each integrating circle Cᵢ are added, and then each added result is outputted to pupil radius detection unit 250 as integrated value Iᵢ.

Luminance difference calculation unit 240 is provided with luminance difference calculators 240₁-240ₙ provided independently for respective integrating circles C₁-Cₙ. Each luminance difference calculator 240ᵢ detects the maximum value and the minimum value of m image data located on the circumference of integrating circle Cᵢ, compares difference Bᵢ and luminance difference threshold Bth, and then outputs n compared results to pupil radius detection unit 250.

Pupil radius detection unit 250 is provided with subtracters 252₁-252ₙ₋₁, selector 253, and comparator 254. Subtracter 252ᵢ obtains the difference of integrated value Iᵢ of each integrating circle Cᵢ with respect to radius R. In other words, difference value ΔIᵢ between integrated values Iᵢ and Iᵢ₋₁ for integrating circles Cᵢ and Cᵢ₋₁ which have one-step difference in radius out of integrating circles Cᵢ-Cₙ is obtained. However, when difference Bᵢ between the maximum value and the minimum value of the image data with respect to integrating circle Cᵢ is larger than luminance difference threshold Bth, difference value △Iᵢ is forcedly set to zero.

Then, selector 253 and comparator 254 output radius R of integrating circle C whose difference value ΔIᵢ is larger than difference threshold ΔIth to pupil candidate retention unit 280, and also output difference value ΔI to pupil candidate retention unit 280 as evaluated value J₀. At this time, when difference Bᵢ between the maximum value and the minimum value of the image data with respect to integrating circle C₁ is larger than luminance difference threshold Bth, subtracter 252ᵢ forcedly sets difference value ΔIᵢ to zero, and hence when difference Bᵢ is larger than luminance difference threshold Bth, radius Rᵢ is not outputted to pupil candidate retention unit 280.

As described based on Fig. 3, when the centers of integrating circles C₁-Cₙ coincide with the center of the pupil, difference Bᵢ between the maximum value and the minimum value of the pixel data does not exceed a certain limited value. However, when they do not coincide with the center of the pupil, difference Bᵢ is large. Therefore, by eliminating information when difference Bᵢ is larger than luminance difference threshold Bth, the possibility of erroneous detection can be reduced, thereby increasing the pupil detection accuracy.

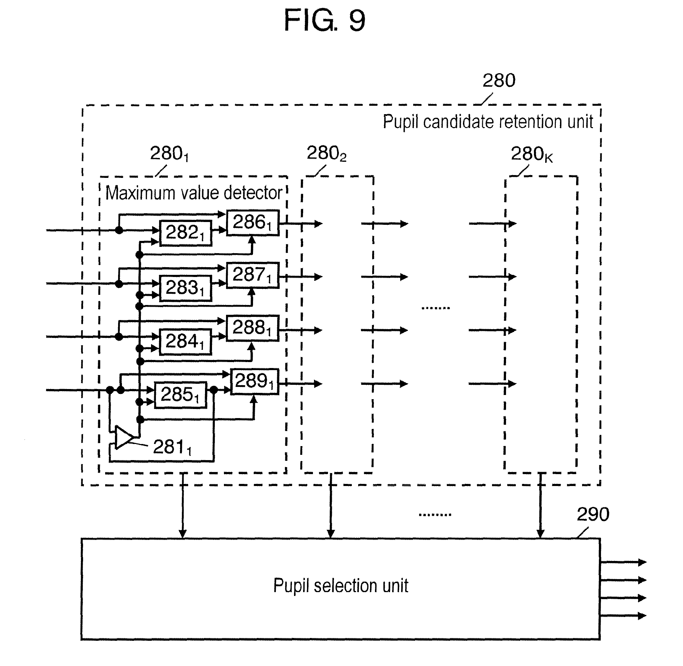

Fig. 9 is a circuit block diagram of pupil position detection unit 270, that is, pupil candidate retention unit 280 and pupil selection unit 290. Pupil candidate retention unit 280 includes a plurality of maximum value detectors 280₁-280ₖ connected in series. Each maximum value detector 280ᵢ includes registers 282ᵢ, 283ᵢ, 284ᵢ and 285ᵢ, comparator 281ᵢ and selectors 286ᵢ, 287ᵢ, 288ᵢ, and 289ᵢ.

Registers 282ᵢ, 283ᵢ, 284ᵢ and 285ᵢ retain the maximum values of the X-coordinates, Y-coordinates, radii R and evaluated values J of pupil candidates. Comparator 281ᵢ compares inputted evaluated value Jᵢ-₁ and evaluated value Jᵢ retained in register 285ᵢ. Selectors 286ᵢ, 287ᵢ, 288ᵢ and 289ᵢ select inputted X-coordinate, Y-coordinate, radius R and evaluated value J or retained X-coordinate, Y-coordinate, radius R and evaluated value J.

Outputs X₀, Y₀ of X counter 262 and Y counter 264 indicating coordinates of the integrating circle as well as output Rₒ of pupil radius detection unit 250 are entered into first maximum value detector 280₁. When evaluated value J₀ outputted from pupil radius detection unit 250 is larger than evaluated value J₁ retained by register 285₁, X-coordinate X₁, Y-coordinate Y₁, radius R₁, evaluated value J₁ retained in registers 282₁-285₁ to second maximum value detector 280₂ via selectors 286₁-289₁. Then, registers 282₁-285₁ retains newly entered X-coordinate X₀, Y-coordinate Y₀, radius R₀, evaluated value J₀.

When evaluated value J₀ does not exceed evaluated value J₁, newly entered X-coordinate X₀, Y-coordinate Y₀, radius R₀, and evaluated value J₀ are outputted to second maximum value detector 280₂ via selectors 286₁-289₁.

When evaluated value J₁ outputted from first maximum value detector 280₁ is larger than evaluated value J₂ retained by register 285₂, second maximum value detector 280₂ outputs X-coordinate X₂, Y-coordinate Y₂, radius R₂, and evaluated value J₂ which have been retained by registers 282₂-285₂ thus far to third maximum value detector 280₃. Registers 282₂-285₂ retain newly entered X-coordinate X₁, Y-coordinate Y₁, radius R₁ and evaluated value J₁. When evaluated value J₁ does not exceed evaluated value J₂, newly entered X-coordinate X₁, Y-coordinate Y₁, radius R₁, and evaluated value J₁ are outputted to third maximum value detector 280₃.

When evaluated value Jᵢ-₁ outputted from upstream maximum value detector 280ᵢ₋₁ is larger than evaluated value Jᵢ retained thus far, i^{th} maximum value detector 280ᵢ outputs data retained thus far to downstream maximum value detector 280ᵢ₊₁, and retains upstream data. When evaluated value Jᵢ-₁ does not exceed evaluated value Jᵢ, the upstream data is outputted to the downstream side.

Consequently, X-coordinate X₁, Y-coordinate Y₁, radius R₁, evaluated value J₁ for the pupil candidate whose evaluated value is the largest are retained in first maximum value detector 280₁, and X-coordinate X₂, Y-coordinate Y₂, radius R₂, and evaluated value J₂ for the pupil candidate whose evaluated value is the second largest are retained in second maximum value detector 280₂, and X-coordinate Xᵢ, Y-coordinate Yᵢ, radius Rᵢ, and evaluated value Jᵢ for the pupil candidate whose evaluated value is the i^{th} largest are retained in i^{th} maximum value detector 280ᵢ.

Selector 253 of pupil radius detection unit 250 of this embodiment has a function to select the maximum value of difference value ΔIᵢ and radius R of integrating circle C at that time. However, pupil candidate retention unit 280 has originally a function to detect the maximum value. Therefore, it is also possible to employ selector 253 having a structure which outputs the output of subtracters 252₁-252,-, and the radius of the integrating circle simply by time division.

Pupil selection unit 290 selects one pupil from the plurality of pupil candidates retained in pupil candidate retention unit 280, and outputs the positional coordinates and the radius to authentication processing unit 140 as the positional coordinates and the radius of the pupil.

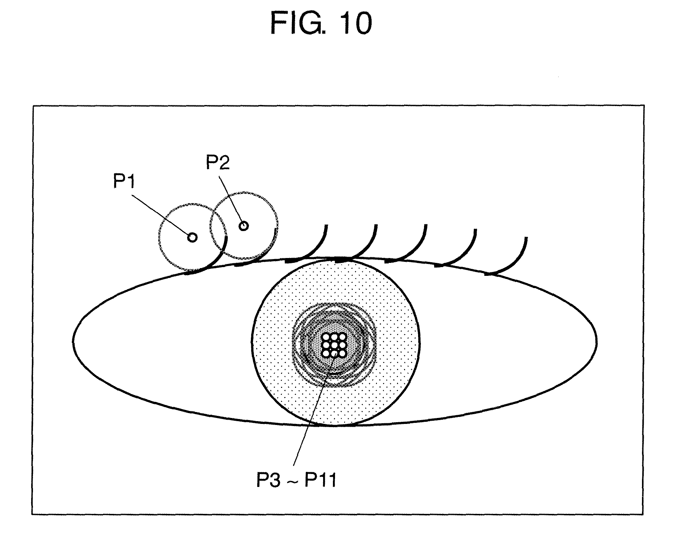

Fig. 10 is a drawing for explaining the operation of pupil selection unit 290. Pupil candidates P₁, P₂ are eyelash detected erroneously, and pupil candidates P₃-P₁₁ are detected real pupils. In this manner, it is generally rare that the pupil candidates detected erroneously are in close formation, and there is a tendency that pupil candidates are in close formation around the real pupil. It depends on the detection accuracy of the pupil candidates, and the number of the pupil candidates in close formation decreases with increase in detection accuracy.

Since error about one pixel which depends on the image pickup element remains even though the accuracy is increased, there is a high possibility that the centers of other pupil candidates exist at the positions of adjacent pixels of the center position of the real pupil. There is also a case in which pupil candidates are generated around the real pupil due to the influence of reflection of the illumination light on a cornea. Therefore, by selecting the pupil candidates having other pupil candidates therearound as the real pupil, the erroneous detection such as to detect eyelash or the like as the pupil is eliminated, and hence the pupil detection accuracy can be improved.

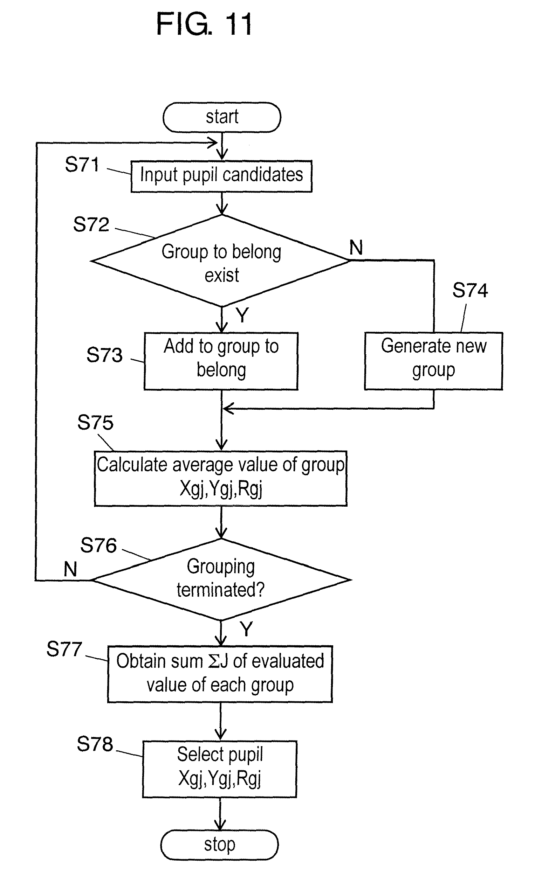

In this embodiment, one pupil candidate is selected from the plurality of pupil candidates as shown below. The plurality of pupil candidates are sorted into groups by grouping those close to each other as one group, and the real pupil is selected based on keys such as the group in which a large number of pupil candidates are included, or the group in which the sum of evaluated values of the pupil candidates are large. Fig. 11 is a flow chart for selecting the pupil out of the pupil candidates based on such an idea.

Pupil selection unit 290 acquires one pupil candidate first. X-coordinate, Y-coordinate, the radius, and the evaluated value of the acquired pupil candidate are represented respectively by Xi , Yi, Ri, and Ji (S71). Then, the existance of a group in which the differences between the values of pupil candidates Xi, Yi and Ri and the average values of groups Xgj, Ygj and Rgj (j is positive integers) are smaller than predetermined thresholds Xth, Yth and Rth regarding each of X-coordinate, Y-coordinate and the radius is checked.
In other words, whether the group which satisfies |Xi-Xgj|<Xth, |Yi-Ygj| <Yth, |Ri-Rgj| <Rth exists or not is checked (S72). If yes, the pupil candidate acquired in Step S71 is added to the group (S73). If not, a new group which only includes the pupil candidate acquired in Step S71 is generated (S74).

Subsequently, recalculation of average values Xgj, Ygj and Rgj is performed for the group added with the pupil candidate in Step S73 or the group newly generated in Step S74 (S75). When the pupil candidates which are not grouped are remained, the procedure goes to Step S71 (S76). When the grouping is completed for every pupil candidates, sum Σ^{J} of evaluated values of the respective pupil candidates included in the group are obtained for the respective groups (S77). Then, average values Xgj, Ygj and Rgj of X-coordinate, Y-coordinate, and the radius in the group whose sum Σj of the evaluated values is the largest is outputted to authentication processing unit 140 as the X-coordinate, Y-coordinate, and the radius of the pupil (S78).

According to the above-described method, there remains instability such that the result of grouping may vary depending on the order of the pupil candidates in principle. However, the pupil candidates which may be detected erroneously are isolated, and the pupil candidates which include the real candidate is in close formation. Therefore, for example, if values of Xth, Yth are set to about 1/2 of the estimated radius of the pupil, there arises no problem in fact. Pupil selection unit 290 may be configured by using a specific circuit which carries out the operation as described above. However, in this embodiment, a CPU (not shown) provided in authentication processing unit 140 is used for carrying out the above-described processing. According to this flow, the data processing is relatively easy and is suitable for the operation in high-speed.

Subsequently, a point that the concentric integrating circles are set so that the density is reduced as the radius increases, which is a characteristic of this embodiment, will be described in detail. As shown in Fig. 8, the density of the integrating circles is set to be high for the circles smaller in radius, and to decrease as the radius increase. It is for preventing the size of the captured pupil image from giving an influence to the pupil detection accuracy.

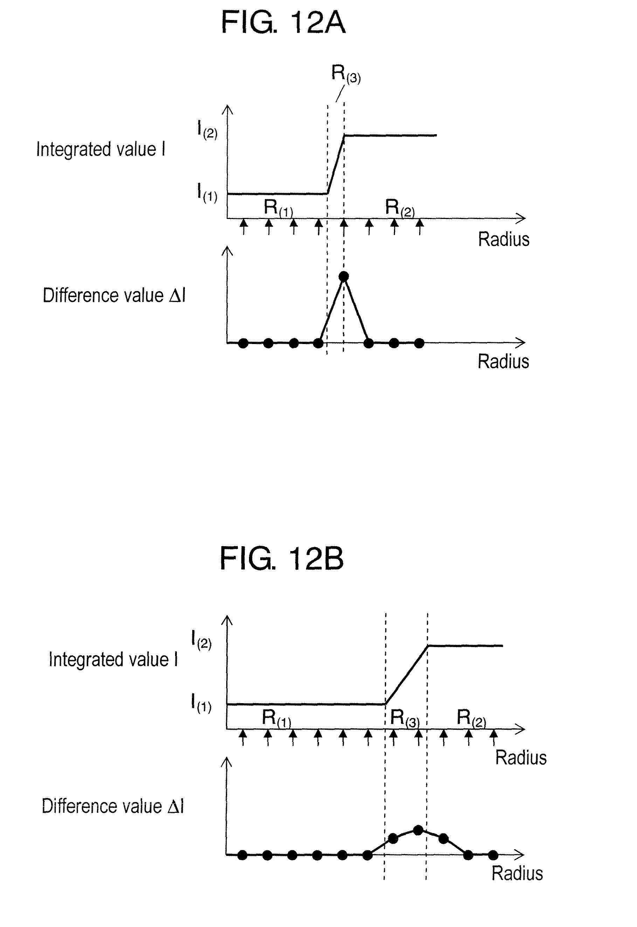

Fig. 12A, Fig. 12B are explanatory drawings showing the reason for employing this structure, and illustrating integrated values with respect to the radii of the integrated circles, and the difference values thereof. In these drawings, the horizontal axis represents radius R of the integrating circle, and the vertical axis represents integrated value I and difference value ΔI. In Fig. 12A, since the integrating circles are located in the low luminance area inside the pupil in the range of radius R₍₁₎, integrated value I is a smaller value I₍₁₎. In the range of radius R₍₂₎, since the integrating circles are located in an annular middle luminance area representing iris, integrated value I is a relatively large value I₍₂₎. However, in the range of radius R₍₃₎, the integrating circles are located at a boundary between the pupil and the iris, and the integrated value is between I₍₁₎ and I₍₂₎.

In this manner, in Fig 12A, the range of radius R₍₃₎ (hereinafter referred to as "boundary range") corresponds to the boundary range between the pupil and the iris, and the boundary range is generated when the eye image is out of focus when being captured, or due to distortion such as aberration of an optical system. In addition, it may be generated when the integrating circle overstrides both areas of the pupil and the iris because of the fact that the pupil or the integrating circle is not a complete round, or that the pixels of the image pickup elements are discrete. In this manner, the boundary range is generated from various reasons, and the boundary range tends to be wider as the size of the captured pupil image increases.

Arrows indicated on the horizontal axis in Fig. 12A represent radii of the integrating circles. As shown in the drawing, when the boundary range is smaller than the intervals of the radii of the integrating circles indicated by arrows, it is possible that one integrating circle is accommodated in the boundary range, but there is no possibility that two or more integrating circles are accommodated therein.

On the other hand, as shown in Fig. 12B, when the size of the photographed pupil is large and the boundary range is larger than the intervals of the radii of the integrating circles, the possibility that two or more integrating circles are accommodated therein increases.

Fig. 12A simultaneously shows difference value ΔIᵢ of integrated value I in the case where the captured pupil image is small. Fig. 12B simultaneously shows difference value ΔIᵢ of integrate value Iᵢ in the case in which the captured pupil image is large. However, in Fig. 12A and Fig. 12B, it is assumed that the radii of concentric integrating circles C₁-Cₙ are set to equal intervals for convenience of description, and the positions are shown by arrows.

When the size of the captured pupil image is small, as shown in Fig. 12A, difference value ΔIᵢ is large at the position boundary between the pupil and the iris. However, when the size of the captured pupil image is large, as shown in Fig. 12B, difference value ΔIᵢ tends to be small. The reason is that when the size of the captured pupil image is large, the boundary area between the pupil and the iris also increases, and when the plurality of integrating circles are included in this boundary area, the difference is dispersed among these integrating circles and hence difference values ΔIᵢ corresponding to the respective integrating circles become smaller. Consequently, as shown in Fig. 12B, when the radius of the integrating circles are set to equal intervals, difference value ΔIᵢ with respect to the image of the large pupil, that is, estimated value J₀, becomes smaller, whereby the pupil detection accuracy may be lowered.

Therefore, in this embodiment, as shown in Fig. 8, integrating circles C20-C14 having smaller radii are concentric circles having one pixel increment in radius. Integrating circles C13-C9 having radii somewhat larger than the above-described circles are concentric circles having two pixel increment in radius. Integrating circles C8-C1 having still larger radii are concentric circles having four pixel increment in radius. In this manner, the plurality of concentric integrating circles C1-C20 are set on partial frame memory 222 on the eye image so that the density is decreased as the radius increases in this embodiment.

Then, as described above, the boundary range increases as the size of the pupil increases. However, for example, when the boundary range increases in proportion to the radius of the integrating circle, and when setting the integrating circle so that the radii of the integrating circles is proportional to the intervals of the radius of the integrating circles, it may be set in such a manner that the amount of increase in radius of the integrating circles grows exponentially with respect to the radius. By setting the density of the integrating circles of smaller radius is set to be high, and to be low as the radius increases, the pupil detection accuracy is prevented from being affected by the size of the pupil.

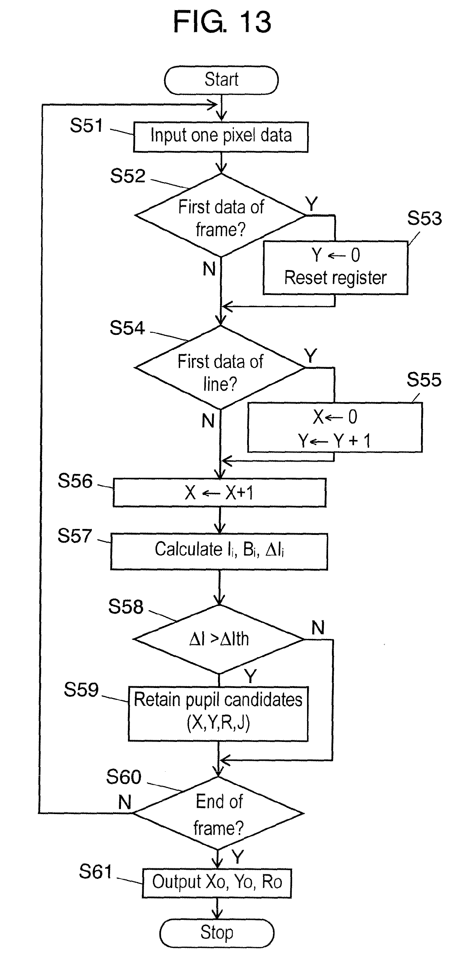

Subsequently, the operation of pupil detection device 200 will be described. In the following description, the eye image data is sequential scanning data, and one frame includes digital data of 480 lines x 640 pixels, for example. Fig. 13 is a flowchart showing the operation of the pupil detection device according to the embodiment of the present invention corresponds to one frame of the eye image.

Pupil detection device 200 acquires image data which corresponds to one pixel (S51). When the acquired image data is a first data of one frame (S52), Y counter 263 is reset and respective registers 282-285 of pupil candidate retention unit 280 are reset (S53). When acquired data is a first data of one line (S54), X counter 262 is reset and Y counter 264 is incremented (S55). Then, X counter 262 is incremented (S56).

Subsequently, acquired image data is acquired in partial frame memory 222. Then, m image data each time, and n × m image data are outputted from each integrating circle Cᵢ out of pixels corresponding n integrating circles C₁-Cₙ on the eye image. Then, adder 230ᵢ corresponding to each integrating circle Cᵢ calculates integrated value Iᵢ of each image data, and luminance difference calculator 240ᵢ calculates difference Bᵢ between the maximum value and minimum value of image data. pupil radius detection unit 250 calculates difference value ΔIᵢ of each integrated value Iᵢ. However, at this time, when difference Bᵢ is larger than luminance difference threshold Bth, difference value ΔIᵢ is forcedly set to zero (S57).

Then, comparator 254 compares difference value ΔIᵢ with difference threshold ΔIth (S58), and when difference value ΔIᵢ is larger than difference threshold ΔIth, pupil candidate retention unit 280 retains X counter 262, Y counter 264, and radius Ro of integrating circle at this time as the pupil candidate and difference value ΔIᵢ as evaluated value Jo. At this time, pupil candidate retention unit 280 rearranges the pupil candidates in the descending order of the evaluated value, and k pupil candidates at maximum are retained (S59). Then, whether or not the acquired data is the data at the end of one frame is determined (S60), and if not, the procedure goes back to Step S51.

When the image data to be entered reaches the last pixel of one frame, pupil selection unit 290 calculates the number of other pupil candidates existing at the pixel positions adjacent to the center coordinates thereof for the respective pupil candidates, and X-coordinate, Y-coordinate, and the value of the radius of the pupil candidate whose value is the largest are outputted to authentication processing unit 140 as X-caardinate Xo, Y-coordinate Yo, and pupil radius Ro of the real pupil (S61).

The series of operations from Step S51 to Step S61 are performed for each entry of the image data to partial frame memory 222 by the amount corresponding to one pixel. For example, when the frame frequency is 30Hz, and the eye image includes 640 × 480 pixels, the above-described series of operations are carried out within 1/(30 × 640 × 480) seconds. Then, when one pixel is inputted to partial frame memory 222, the integrating circle moves by an amount corresponding to one pixel on the image, and hence the integrating circle scans on the image once during the time when the image of one frame is entered. In this manner, the pupil is detected on the real time basis with respect to the image data picked up by image pickup unit 120 by using a circuit of relatively small scale.

Although the number of concentric integrating circles is 20 and the number of image data to be acquired from one integrating circle is eight in the embodiment of the present invention, these numbers are preferably determined considering the detection accuracy, processing time, and the scale of the circuit in parallel. The number of image data to be acquired from one integrating circle is not necessarily required to be the same for all the integrating circles. In this case, it is recommended to divide the integrating value of each integrating circle by the number of image data to be acquired from the integrating circle for normalization.

Although the case in which the image data extraction unit includes the line memory and the multiplexer has been described in conjunction with this embodiment, the invention does not depend on the detailed circuit structure of the image data extraction unit. For example, it may be the image data extraction unit which includes a shift register, and may also be the image data extraction unit of other structure.

According to the present invention, the pupil detection device and the iris authentication apparatus which can detect the position of the pupil with high degree of accuracy and at high-speed is provided.

### Industrial Applicability

As the present invention can provide the pupil detection device which can detect the position of the pupil with high degree of accuracy and at high-speed, it is effective for the iris authentication apparatus or the like which is used for personal authentication.

## Claims

1. A pupil detection device comprising:
an image data extraction unit, the image data extraction unit determining a plurality of concentric circles on an eye image as integrating circles respectively, and extracting the eye image data along the integrating circles;
a contour integrating unit that integrates the image data extracted by the image data extraction unit along the respective circumferences of the integrating circles; and
a pupil position detection unit that detects the center coordinates of the integrating circle whose integrated value of the contour integrating unit changes stepwise with respect to a radius of the integrating circle as pupil position,
wherein the density of plurality of concentric integrating circles is set to be reduced as the radius increases.

2. The pupil detection device of Claim 1, wherein increment of the radii of the plurality of concentric integrating circles grows exponentially with respect to the radii of the integrating circles.

3. The pupil detection device of Claim 1, wherein the image data extraction unit extracts a plurality of image data corresponding to the respective integrating circles simultaneously.

4. An iris authentication apparatus comprising the pupil detection device of any one of Claim 1 to Claim 3.
